# EUROPEAN PATENT APPLICATION

(11) **EP 2 653 455 A1**
(43) Date of publication of application: **23.10.2013**
(21) Application number: 12460034.7
(22) Date of filing: 26.06.2012
(51) Int. Cl.: C05D 3/02, C05D 5/00, C05G 3/00

(54) **Fertilizer and method of obtaining a suspension of mineral-organic fertilizer from waste post-fermentation**

(30) Priority: 18.04.2012 PL 39887012
(71) Applicant: Biosynergia S.A., 04-041 Warszawa (PL)
(72) Inventor: Kedzia, Wojciech Józef, 85-046 Bydgoszcz (PL); Merta, Robert, 41-710 Ruda Slaska (PL)
(74) Representative: Kaminski, Zbigniew

(57) **Abstract**

Fertilizer and the method of obtaining a suspension of mineral-organic fertilizer from waste post-fermentation, characterized in that the post-fermentation waste constitutes 20-90% of the charge content of 5-40% dry in which 35-60% is organic carbon, mixed with calcium oxide in an amount of 2-10% by weight of the charge, and magnesium carbonate in an amount of 2-8% by weight of the charge, and then neutralized with phosphoric acid in an amount of 5-20% by weight of charge, at 108-150°C for 30 minutes, at a rate of temperature rise of a mixture of ≤ 2°C / 1 min. The method of obtaining a suspension of mineral-organic fertilizer from waste post-fermentation, characterized in that the post-fermentation waste constitutes 20-90% of the charge content of 5-40% dry in which 35-60% is organic carbon, mixed with calcium oxide in an amount of 2-10% by weight of the charge, and magnesium carbonate in an amount of 2-8% by weight of the charge, and then neutralized with phosphoric acid in an amount of 5-20% by weight of charge, at 108-150°C for 30 minutes, at a rate of temperature rise of a mixture of ≤ 2°C / 1 min.

## Description

This invention relates to fertilizer and a method of obtaining a suspension of mineral-organic fertilizer from waste post-fermentation in biogas recovery while the heat of reaction.

There are two alternative directions of the post-fermentation waste from biogas plants: for the purpose of fertilizer or as fuel in combustion processes. Waste biogas digestate is a big problem, and economic organization. Used for the fermentation of the substrate determines the type of agricultural use of the emerging possibilities of digested matter is therefore in many cases these opportunities are very limited. Apart from these difficulties, it is assumed that the use of wastes for traditional post-fermentation biogas plant with a capacity of 1 MW must be able to collect them for use in fertilization area 2500 ha. This raises the need for further processing.

The biogas, production of useful forms of energy, that is, heat and electricity, environmental considerations are beyond the basic reason for their functioning. The above-mentioned forms of energy produced during combustion of biogas produced by anaerobic digestion in bioreactors, which in turn are a source of energy from agricultural products and various types of organic waste. The rate of methane fermentation process is conditioned by several factors, one of which is the temperature of the so-called deposits, but to ensure its optimum level the heating is required. The heat from the generators is an alternative direction for its application in relation to sales to external, particularly in winter. Therefore it happens that the production of thermal energy in the generator does not provide the needed amount.

This condition creates a need to develop solutions to post-fermentation processing waste in the process to ensure its hygienisation, to ensure the possibility of its use as an organic-mineral fertilizer and the capacity to produce additional heat.

Assuming that a large part of the biogas plants are located in areas where the predominant purchasers are often farmers using an soils with low contents of available phosphorus for plants in the present invention proposes a technology of phosphorus-organic fertilizer from waste dewatered digestate which is a readily available source of phosphorus for plants to use the soil or as a supplement to other fertilizers, and the aim of optimizing production costs proposed technology is also becoming a donor of heat.

Known technologies do not meet the above requirements, it is synergistic processing of digested matter into another form of fertilizer and additional production and thermal energy.

Familiar with the use of waste agricultural technologies, and agrotechnical processing into compost. Known methods for preparing mineral fertilizers and organic and mineral wastes do not use post-fermentation. This waste is classified in the classification of waste under the number 19 06 05 (liquor from anaerobic treatment of animal and vegetable), or number 19 06 06 (digestate from anaerobic treatment of animal and vegetable) are infinitely more valuable substrate for the production of these fertilizers, and infinitely safer for the environmental threats posed than the wastes used in the following technologies with code 19 06 04 (digestate from anaerobic treatment of municipal waste), commonly referred to as sludge.

It is known from patent specification FR 3648128 method and installation for the production of fertilizers with compost and waste products **characterized in that** the product is treated with sulfuric acid to dissolve organic substances obtained in this way the solution is filtered to remove unwanted materials not dissolved in acid sulfuric acid, then filtered the solution is mixed with the three basic calcium phosphate and / or dolomite to obtain a homogeneous mixture (SLIP), this is mixed in touch with your recycling and granules are formed, they are then dried by causing the evaporation of water and the acid concentration is achieved in the granules to sufficient to enable a quick response neutralization of phosphates and / or dolomite, and then drying the granules is continued until the moisture level will be determined and achieved a market product is separated from the product is too coarse (oversize) by known methods. The resulting product is a fertilizer - mineral.

It is known from patent specification PL 169484 a method for preparing organic-mineral fertilizer from sewage sludge by centrifuge **characterized in that** the sludge is added to the centrifuge fertilizers macronutrients and calcium carbonate and magnesium, and then lets the sludge worms breed Red Hybrid California.

It is known from patent specification PL 169896 as post-fermentation waste hygienization **characterized in that** the post-fermentation sludge is mixed with cement dust from electrostatic precipitators with cement and roasted dolomite and BASALT.

It is known from patent specification PL 178719 disposal of sewage sludge wherein the sludge is mixed with coal waste.

It is known from PL Patent 184149 B1 a method for producing fertilizer from organic waste **characterized in that** the organic waste shall be nitrogen dioxide or its precursor, and then added alkali.

It is known from patent specification PL 185159 as working fluids containing sludge **characterized in that** in a continuous process for the dehydration apply the acid and ammonia.

It is known from the description of the patent application PL 326127 method for producing solid fertilizer from organic sewage sludge wherein the sludge contained in the organic structures of biological origin partly mineralizes in the environment of a strong acid and the resulting mixture is neutralized and becomes a substance that binds water in the environment reaction.

It is known from patent specification PL 193582 a method for preparing granular organo-mineral fertilizers **characterized in that** for any mineral fertilizers added sludge, but in the case of ammonium or urea fertilizers, sewage sludge prior to mixing is treated with sulfuric acid or phosphoric acid to a pH aqueous extract in the range 6.5-8.0, and the resulting mixture is granulated and seasoning.

It is known from patent specification PL 194103 a method for producing granulated organic fertilizers **characterized in that** the dewatered sludge from the sewage is mixed with fly ash from coal-fired boilers, with binders and plasticizers and potassium fertilizer, after which the resulting mixture is granulated.

It is known from patent specification PL 202023 a method for preparing fertilizer from sewage sludge and a system for obtaining fertilizer from the sludge, **characterized in that** the sludge introduced into the reactor, acid-resistant encapsulated magnesium oxide is added, followed by addition of salts, trace elements and sulfate, urea leading the process to obtain an intermediate of the water content of crystallization is not more than 6.5 water molecules per molecule of produced magnesium sulfate, after which the intermediate is mixed with potassium and phosphorus fertilizer and then dry and dehydrated.

It is known from patent specification PL 206550 organic waste processing method and apparatus for processing organic waste wherein the organic waste is introduced in a continuous system into the heating chamber where it is subjected to heating at 105-300 °C, after which the solid fraction is poured into the discharge chamber.

It is known from patent specification PL 209857 a method for producing organic and mineral fertilizers on the basis of municipal sewage sludge wherein the sludge is mixed with the cereal straw, and the mixture is pumped through a die with calibration holes and cut into sections.

It is known from PL 210311 patent process for the preparation of fertilizer from the sludge produced in biological wastewater treatment plants **characterized in that** the encapsulated container technology introduced sludge, dry matter content maintained in the range from 40% to 15%, after the shine is amended as magnesium oxide in the form of roasted magnesite, then sulfuric acid is dosed while stirring the reaction mixture and discharging excess water, and the remaining not evaporated water associated the crystallization structure thus formed is magnesium sulfate.

Alternate direction of the use of waste associated with using them as fuel in the combustion process in order to obtain heat.

Commonly used for this purpose burning in the grate and fluidised bed boilers. More hazardous waste incineration takes place in the so-called waste incinerators. Solutions are used where an assembly of the evaporation of water from the bio-sludge, regardless of whether sludge is pre-dried, whether or not the team for the disinfection of water vapor gasification systems (low-temperature pyrolysis) of organic residues of bio-pellet catalytic reactor fully oxidizing organic compounds to H₂O and CO₂ efficiency of established systems, heat exchangers, in order to minimize the energy input to the process of recovery and final filters to capture part of the inorganic solids and metals and their compounds. Remains of an inorganic waste.

An attempt to synergistic production of heat and fertilizer application PL 385950 describes a method for producing electricity, heat, fertilizer and / or feed and ethanol from agricultural crops and waste products in the agro processing industry. It presents a method for producing electricity, heat, ethanol, fertilizer and / or feed from agricultural waste products and agro-processing, using waste, especially such as stillage, manure, straw, rape cakes, silage and other substrates , lies in the fact that integrated with each other: the distillery from biogas, heat collectors in the distillery and the conversion of alcohol-distilling slops for energy fertilizer and / or feed in order to achieve synergies, both economically and ecologically, in the processing of waste products. The method allows to obtain from agricultural waste products and useful products, such as ethanol, electricity and heat, and fertilizer, and fodder.

The above-mentioned technologies, which are image of the current state of the art in this field are dedicated towards the processing of sewage sludge, organic matter and therefore dangerous for environmental reasons. On the other hand, these technologies are possible to be used for processing waste in biogas digestate, but do not give the possibility to obtain another desired product which is thermal energy.

Due to the damage potential of microbial load contained in wastes after fermentation in the present invention a technique consisting in subjecting hygienization microbial organisms with alkaline pH by the task of calcium oxide at ambient or elevated due to the addition of calcium oxide under normal pressure.

Temperature and pressure generated during the neutralization of calcium oxide and magnesium carbonate have a value of 150 ° C and 0.5 MPa. The intensity of the reaction is particularly high for use as magnesium carbonate crypto crystalline magnesite consists of grains smaller than 0.01 mm.

This carbonate is entered as a reactant because of the deliberate delivery of magnesium to the resulting fertilizer and as a reagent with phosphoric acid, which runs decomposition with evolution of carbon dioxide gas raises the temperature and pressure conditions in a pressure reactor which results in rapid intended hygienisation waste after fermentation.

Alkaline conditions and then changing pH and high temperature and pressure, combined with their duration, a complete waste hygienisation regardless of its origin and microbial load. Quantitative selection of waste contributed by the fermentation of organic matter and sanitizers her and partially decomposing the mixture successively added calcium oxide and magnesium carbonate and phosphoric acid preserves the product assumed amount of organic compounds, which compounds after application to the soil are the backbone of carbon compounds in the resynthesis organic connections leading to the formation of humus.

Used to conduct the process of reactor pressure of 2.0 MPa strength allows you to secure the achievement of several atmospheres pressure and temperature steam nasycowej between 108 - 134 °C. These conditions cause rapid hydrolysis, denaturation and coagulation enzymes and cellular structures. The resulting organic-mineral fertilizer is the dominant inorganic compound is magnesium sulfate. It is a form readily soluble in soil solution. Providing so this form of magnesium in the form of soil fertilization contributes to higher amounts of this element in the complex sorption, and consequently increases its availability to plants. It should be emphasized that in all rinsed soils with type of air-water relations the magnesium balance is inherently vulnerable to permanent depletion due to its leaching into the soil profile beyond the reach of the root system of plants.

The method according to the invention also allows the recovery of large amounts of heat of reaction and use of this form of energy to the different needs associated with the functioning of the plant. In particular, this energy can supplement the heat generated in the generator powering the fermentation chamber, to be sold to external customers and serve as a source of heat for other uses of technology related to the operation of biogas plants, such as space heating or drying products. The amount of heat accompanying hygienization 1 tonne of digested matter is about 400 kW

The advantage is the possibility of alternative use of waste and post-fermentation processing of the organic-mineral fertilizer while the manufacture combined with the technical ability to use large amounts of heat.

The above solutions do not have the advantages of existing solutions. Technology described in Patent FR 2648128 B1 leads to complete decomposition of organic matter. Obtained after filtration and rejection of solid residues of excess sulfuric acid solution was neutralized after the reaction of synthesis of phosphates and / or dolomite forms a mineral fertilizer, artificial. Technology described in patent PL 326127 A1 is an obvious solution. Technologies described in the patents PL 202023 and PL 210311 B1 assume the first stage adding to the slurry sludge calcined magnesite. It contains magnesium oxide is a compound higienic sediment, or causing a significant increase in temperature of the mixture. Second, in order to receive magnesium sulfate is added to sulfuric acid. The method according to these solutions involves the use of the resulting heat of reaction. In the solution according to the invention, an installation for the production of fertilizer is connected by a water jacket cooling the reactor and installation of vapor condenser cooling water generator.

The addition of PL 210311 B1 by sulfuric acid after addition of sewage sludge calcined magnesite is to prevent excessive foaming, which is by the creators of technology is a phenomenon unfavorable for a task of organic acid. In the present embodiment according to the invention, these adverse event foaming is reduced by the use of a hermetic reactor where the resulting pressure foaming phenomenon is limited, and in addition it is installed on the surface of the substrate reacting suspension speed stirrer with the task of breaking foam. The addition of acid, as is also the first to set off a well-known exothermic reaction of mixing the acid with water, which in the proposed solution improves the energy balance of biogas plants.

The order of addition of calcined magnesite and sulfuric acid in the patent PL 210311 B1 is dictated by its creators do not need to call the formation to noxious fumes to the environment mainly selenium compounds. In the proposed solution, these compounds are formed in the reactor, but thanks to its airtight construction and installation of external odor neutralization by the process described in patent GB 210 902 B1 in which the Fenton reaction, the phenomenon is not burdensome for the environment.

The technologies involve as key to the process of application of calcined magnesite, calcined rocks and thus being chemically with magnesium oxide. Need for environmental reasons would appear to be unjustified. The process of calcination of raw magnesites place under conditions of high temperature, so it is very energy intensive.

In an embodiment of the invention by alkalizing the added role as the last act of phosphoric acid and calcium oxide, magnesium carbonate - a salt in the reaction with the acid which leaves the reaction of carbon dioxide, the gas whose vapor pressure is a major reason for the increase in pressure and temperature in the reactor over quantities appearing in the normal conditions.

Technologies presented in the two patents lead to the creation of fertilizer with the characteristics of mineral fertilizers. From the standpoint of fertilizer needs of soils, except soils with organic substances, as necessary as minerals are compounds of the appellants to the soil organic carbon. This objective, through the creation of organic-mineral fertilizer has been achieved in the proposed solution according to the invention.

The solution according to the invention has been presented in detail in the following embodiment.

The fermentation waste with a content of 5-40% dry weight, the amount of 1000 kg mixed into the reactor pressure, and gradually mixed calcium oxide in an amount of 60 kg while avoiding too sudden rise in temperature above 5°C / min and temperatures exceeding 100°C. Then, magnesium carbonate is added in an amount of 85 kg and then added to concentrated phosphoric acid in an amount of 190 kg is not hallowing the sudden rise in temperature above 2°C / min and temperatures exceeding 150°C. In the process of releasing water vapor is discharged into the condenser which receives the heat, which, together with the warmth of a received through the water jacket of the reactor is the energy product of the process. Then the resulting slurry was subjected to pH control and adds the reagents needed to achieve a neutral pH of the suspension. The product slurry containing a mixture of single-and double hydrogenphosphates calcium and magnesium from the remnants of organic matter digested matter is then made woven outside the reactor.

Fertilizer according to the invention has been described in the embodiment Suspension phosphorus-organic fertilizer from waste post-fermentation, **characterized in that** it is a suspension higienized waste containing 2.5% Mg, Ca 3% and 6% P, and 6% organic carbon.

## Claims

1. The method of obtaining a suspension of mineral-organic fertilizer from waste post-fermentation, **characterized in that** the post-fermentation waste constitutes 20-90% of the charge content of 5-40% dry in which 35-60% is organic carbon, mixed with calcium oxide in an amount of 2-10% by weight of the charge, and magnesium carbonate in an amount of 2-8% by weight of the charge, and then neutralized with phosphoric acid in an amount of 5-20% by weight of charge, at 108-150oC for 30 minutes, at a rate of temperature rise of a mixture of ≤ 2 ° C / 1 min.

2. The method according to claim 1, **characterized in that** the reaction proceeds in acid-proof hermetic reactor with water jacket, a stirrer with speeds from 10 to 50/1 min, mechanical foam breaking system, feeding system and the pressure of solids and liquids.

3. The method according to claim 1, **characterized in that** the quota held a form of magnesium carbonate is magnesite crypto crystalline grain size below 0.01 mm.

4. The method according to claim 1, **characterized in that** the calcium oxide is added to the mixture at a rate that causes the temperature rise not exceeding the value of 5 ° C / 1 min. and maintaining the process temperature below 100 ° C.

5. The method according to claim 1, **characterized in that** the heat of the two reactions received by the reactor cooling system and air-tight vapor condenser is transferred to the block where the energy and heat is transported to the biogas methane fermentation chamber.

6. Suspension phosphorus-organic fertilizer from waste post-fermentation, **characterized in that** it is a suspension higienic waste containing 2-9% MgO, 2-16% CaO and 5-50% P2O5 and 5-25% organic carbon.
